Europäisches Patentamt

European Patent Office

Office européen des brevets

(19)

(11) EP 0 808 043 A1

(12) DEMANDE DE BREVET EUROPEEN

(43) Date de publication:
19.11.1997 Bulletin 1997/47

(51) Int Cl.$^6$: H04L 1/20

(21) Numéro de dépôt: 97401033.2

(22) Date de dépôt: 07.05.1997

(84) Etats contractants désignés:
BE CH DE ES GB IT LI SE

(30) Priorité: 14.05.1996 FR 9605992

(71) Demandeur: ALCATEL TELSPACE
92734 Nanterre Cédex (FR)

(72) Inventeurs:
• Guillemain, Christian
95110 Sannois (FR)

• Ferrad, Abdelkrim
93300 Aubervilliers (FR)

(74) Mandataire: Scheer, Luc et al
ALCATEL ALSTHOM,
Département de Propriété Industrielle,
30, avenue Kléber
75116 Paris (FR)

(54) **Système de détection de la présence d'une onde porteuse d'un signal numérique et récepteur comprenant un tel système**

(57) L'invention concerne un système de détection de la présence d'une onde porteuse d'un signal numérique se présentant à une fréquence rythme donnée. Le système comprend des moyens fournissant à chaque temps symbole (Ts) au moins deux échantillons en bande de base du signal numérique.

Selon l'invention, le système comprend :

- un estimateur de rythme (30) fournissant, à partir des échantillons en bande de base, un signal d'erreur ($\hat{\varepsilon}$) correspondant à l'erreur de phase entre la fréquence rythme à récupérer et la fréquence rythme locale ;

- des moyens de détection (42, 43) générant un signal de détection (A) de l'onde porteuse lorsqu'un niveau (SU) représentatif de la variance des signaux d'erreur ($\hat{\varepsilon}$) atteint une valeur de seuil (S).

L'invention s'applique notamment aux récepteurs de signaux transmis en mode AMRT.

FIG. 4

EP 0 808 043 A1

## Description

Le domaine de l'invention est celui des télécommunications numériques, notamment par satellite, et concerne plus précisément un dispositif de détection de la présence (ou de l'absence) d'une onde porteuse d'un signal reçu par un récepteur, cette onde porteuse étant modulée par un signal numérique à la fréquence d'une horloge rythme, encore appelée horloge symbole.

L'invention s'applique à tout type de modulation numérique, par exemple aux modulations par déplacement de phase (MDP-M, Modulation de phase à M états) ou plus généralement aux modulations d'amplitude et de phase (MDAP-M, Modulation de phase et d'amplitude à M états) et à celles notamment utilisées dans les systèmes de télécommunications AMRT (Accès Multiple à Répartition dans le Temps), AMRF (Accès Multiple à Répartition de Fréquences) ou SCPC (Single Carrier Per Channel).

L'invention peut s'appliquer à la détection d'une porteuse (par exemple de type MDP-2 ou MDP-4) avant démodulation du signal reçu, cette démodulation consistant en des traitements de synchronisation et de décision permettant de restituer le signal numérique, dans le contexte d'une transmission par satellite. Dans un tel contexte, trois problèmes majeurs se posent :

- la bande de la porteuse peut être inférieure aux incertitudes de fréquence de la liaison satellite. Ces incertitudes peuvent être d'origines diverses : faible stabilité relative des oscillateurs locaux des équipements de transposition de fréquence, présence d'effet Doppler, dérive du satellite,.... En conséquence, il faut pouvoir tolérer un important écart de fréquence entre la porteuse reçue et l'oscillateur local de démodulation ;
- la porteuse peut être absente ou présente (transmission en mode SCPC) ;
- la détection de la porteuse doit être rapide (notamment en transmission en mode AMRT) et fiable, malgré un rapport Eb/No proche de 2 dB sans codage de l'information.

Plus précisément, le système de détection de l'invention doit pouvoir s'intégrer dans un récepteur entièrement numérique, la détection s'opérer avant démodulation et les conditions de bruit doivent pouvoir être défavorables (Eb/No = 2 dB). De plus, la détection doit pouvoir être réalisée rapidement, avec une durée maximale avoisinant une centaine de temps symbole.

On connaît un système de détection de présence ou d'absence d'une onde porteuse basé sur l'établissement d'un histogramme de phase du signal échantillonné. La détection d'une non-uniformité de cet histogramme est révélatrice de la présence d'une onde porteuse.

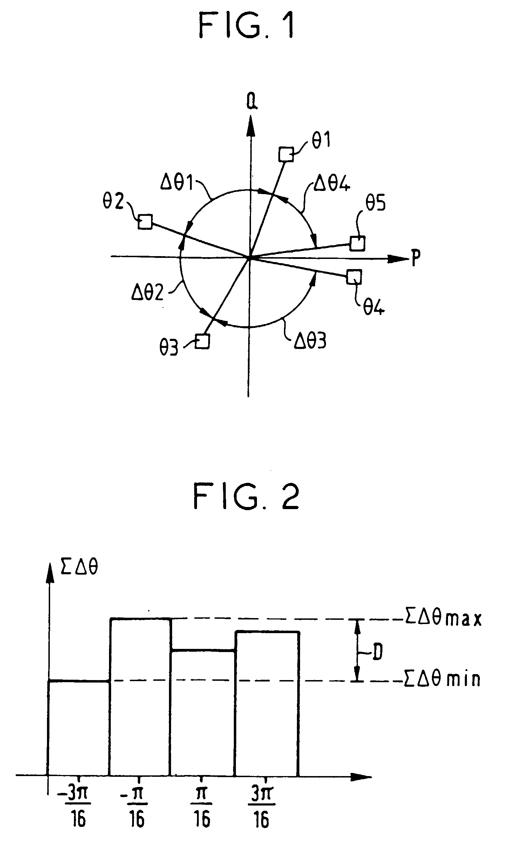

La figure 1 représente la constellation d'un signal de type MDP-4 reçu et les phases $\Theta_i$ observées. Les axes représentent les porteuses en quadrature de phase sont notés P et Q. A chaque nouveau symbole reçu (la récupération de rythme est supposée déjà acquise), la différence $\Delta\Theta_i = (\Theta_i - \Theta_{i-1})$ modulo $\pm\pi/4$ est calculé. A partir des écarts de phase $\Delta\Theta_i$ observés, on construit un histogramme d'écarts de phases tel que celui représenté à la figure 2. Cet histogramme comporte ici 4 classes (MDP-4) et est obtenu en incrémentant la classe correspondant à $\Delta\Theta$ et en décrémentant de la même quantité la classe $\Delta\Theta_{k-N}$ où N est la fenêtre d'analyse exprimée en nombre de symboles. L'accumulation des écarts de phases $\Delta\Theta_i$ se traduit, en présence d'un signal effectivement reçu et non en présence de bruit, par un écart D (avec $D = \Sigma\Delta\Theta_{max} - \Sigma\Delta\Theta_{min}$) supérieur à une valeur de seuil prédéfinie.

L'inconvénient de cette méthode est qu'en présence de bruit ou de fortes dérives en fréquence, on observe une uniformisation des écarts de phase et la valeur de seuil n'est pas atteinte malgré la présence d'une porteuse. Si la valeur de seuil est diminuée, le taux de fausses alarmes devient trop important. En conséquence, cette méthode n'est pas applicable aux signaux présentant des dérives de fréquences importantes entre les fréquences porteuse et de démodulation, ou aux signaux fortement bruités.

De plus, cette méthode suppose la récupération de rythme acquise, ce qui est coûteux en temps.

La présente invention a pour objectif de remédier à ces inconvénients.

Plus précisément, un des objectifs de l'invention est de fournir un système numérique de détection de la présence ou de l'absence d'une onde porteuse d'un signal se présentant à une fréquence rythme donnée, ce système alliant rapidité, fiabilité, fonctionnement avec un rapport Eb/No faible (proche de 2 dB) et peu sensible aux dérives de fréquence de l'onde porteuse.

Un autre objectif est de fournir un tel système où la fiabilité de la détection est peu dépendante du rapport Eb/No.

Un objectif complémentaire est de simplifier la réalisation d'un tel système de détection en le combinant avec un estimateur de rythme, par exemple de type Oerder et Meyr.

Ces objectifs, ainsi que d'autres qui apparaîtront par la suite, sont atteints grâce à un système de détection de la présence d'une onde porteuse d'un signal numérique se présentant à une fréquence rythme donnée, le système comprenant des moyens fournissant à chaque temps symbole au moins deux échantillons en bande de base du signal numérique, ce système comprenant :

- un estimateur de rythme fournissant, à partir des échantillons en bande de base, un signal d'erreur correspondant à l'erreur de phase entre la fréquence rythme à récupérer et la fréquence rythme locale ;
- des moyens de détection générant un signal de détection de l'onde porteuse lorsqu'un niveau représ

sentatif de la variance des signaux d'erreur atteint une valeur de seuil.

L'observation d'un niveau représentatif de la variance du signal d'erreur permet de s'affranchir des variations de ce signal d'erreur dans le temps.

Avantageusement, les moyens de détection comprennent un calculateur de la variance du signal d'erreur.

Préférentiellement, le système de l'invention comporte des moyens de levée d'ambiguïté de phase de $\pi/2$ entre l'estimateur de rythme et les moyens de détection.

L'estimateur de rythme est avantageusement de type Oerder et Meyr.

L'invention concerne également un récepteur de signaux numériques comprenant un tel système de détection.

D'autres caractéristiques et avantages de l'invention apparaîtront à la lecture de la description suivante d'un mode de réalisation préférentiel, donné à titre illustratif et non limitatif, et des dessins annexés dans lesquels :

-   la figure 1 représente la constellation d'un signal de type MDP-4 reçu et les phases $\Theta_i$ observées ;
-   la figure 2 représente un histogramme d'écarts de phases issu de la constellation de la figure 1 ;
-   la figure 3 est un schéma synoptique d'un estimateur de type Oerder et Meyr pouvant être utilisé dans le système de détection de présence de porteuse selon l'invention ;
-   la figure 4 est un schéma synoptique d'un mode de réalisation préférentiel du système de détection de porteuse selon l'invention ;
-   la figure 5 montre des caractéristiques de dispersion des estimations $\hat{\varepsilon}$.

Les figures 1 et 2 ont été décrites précédemment en référence à l'état de la technique.

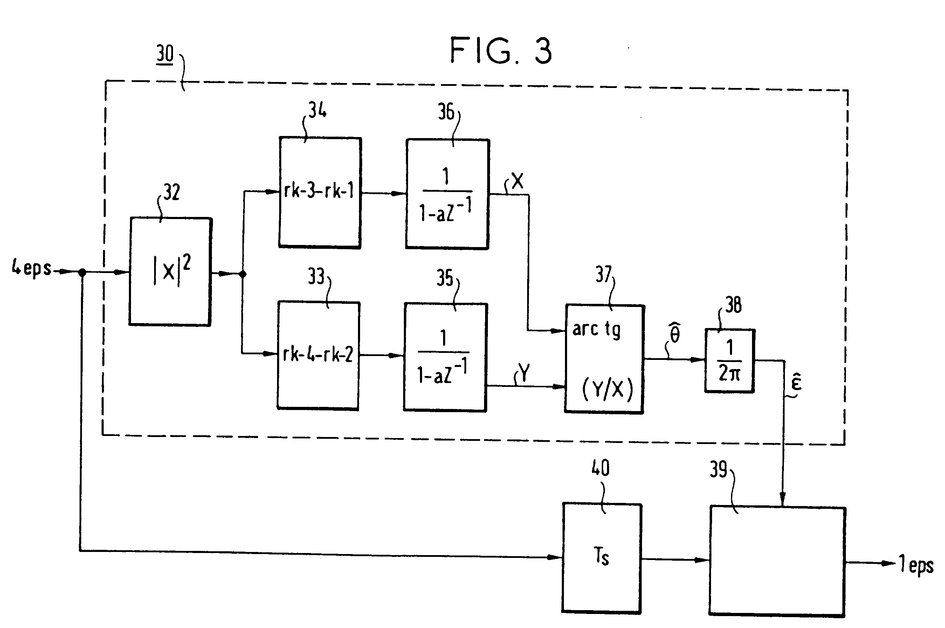

La figure 3 est un schéma synoptique d'un estimateur de rythme de type Oerder et Meyr pouvant être utilisé dans le système de détection de porteuse selon l'invention.

Sur cette figure, l'estimateur de rythme de type Oerder et Meyr, destiné à assurer un pointage du centre de l'oeil d'un signal reçu transposé en bande de base, est généralement référencé par 30. Un tel estimateur est décrit dans l'article "Digital Filter and Square Timing Recovery" de Martin Oerder et Heinrich Meyr, Transactions on Communications, vol.36, n°5, mai 1988, pages 605 à 612.

L'estimateur de rythme comporte des moyens 32 d'élévation au carré du module de l'enveloppe complexe du signal numérique se présentant au rythme de 4 échantillons complexes par temps symbole (4 eps). Ces échantillons proviennent d'un convertisseur analogique-numérique placé en amont (non représenté), ou éventuellement d'un filtre interpolateur assurant une augmentation du nombre d'échantillons si celui-ci est insuffisant après échantillonnage.

Les échantillons élevés au carré sont appliqués à des premiers moyens d'accumulation 33, 35 qui accumulent les différences entre les échantillons pairs de l'enveloppe complexe élevée au carré. Les moyens 33 calculent $r_{k-4} - r_{k-2}$, où $r_k$ constitue un échantillon, et les moyens 35 accumulent ces différences par une fonction $1/(1 - aZ^{-1})$ avec -a- la constante de temps. L'accumulation est donc réalisée par un filtre à réponse impulsionnelle infinie (IFIR) qui assure une fonction d'intégration numérique des différences calculées.

De même, des seconds moyens d'accumulation 34, 36 accumulent les différences entre les échantillons impairs de l'enveloppe complexe élevée au carré. Les moyens 34 calculent $r_{k-3} - r_{k-1}$ et les moyens 36 accumulent ces différences, également par une fonction $1/(1 - aZ^{-1})$.

La référence temporelle à partir de laquelle on décide quels sont les échantillons pairs et quels sont les échantillons impairs est quelconque.

Les accumulations 35 et 36 sont par exemple réalisées sur 64 ou 128 temps symboles (Ts) et fournissent respectivement des niveaux Y et X à un module de calcul 37 fournissant en sortie un signal d'estimation de phase $\hat{\Theta}$ égal à arctg (Y/X). Le signal d'estimation de phase $\hat{\Theta}$ est un signal d'erreur correspondant à l'erreur de phase entre la fréquence rythme à récupérer et la fréquence rythme locale.

La fonction arctg peut par exemple être obtenue selon deux techniques :

-   la première technique consiste à exploiter un développement limité de la fonction arctg sur un faible domaine angulaire et à exploiter les propriétés de symétrie de cette fonction ;
-   la seconde technique consiste à utiliser un algorithme appelé CORDIC (COordinate Rotation DIgital Computer) qui permet de déterminer un angle de rotation par itérations à partir de coordonnées cartésiennes, sans faire appel à des multiplications.

Ces deux techniques permettent d'obtenir des précisions de l'ordre de 16 bits en utilisant peu de place mémoire ou avec peu d'itérations, en comparaison avec une implantation directe en mémoire de la fonction arctg.

Le signal d'estimation de phase $\hat{\Theta}$ est divisé par $2\pi$ dans un module 38 pour fournir une estimation $\hat{\varepsilon}$ du déphasage du pointage de l'oeil à Ts/8 près. L'estimation $\hat{\varepsilon}$, constituant également un signal d'erreur correspondant à l'erreur de phase entre la fréquence rythme à récupérer et la fréquence rythme locale, est fournie à un interpolateur 39 recevant par ailleurs, tous les Ts, quatre échantillons complexes d'entrée, par l'intermédiaire d'une unité à retard 40. L'interpolateur 39 fournit un échantillon complexe par temps symbole (1 eps), cet échantillon complexe représentant l'information exempte d'interférence inter-symboles sur laquelle sera prise la décision finale.

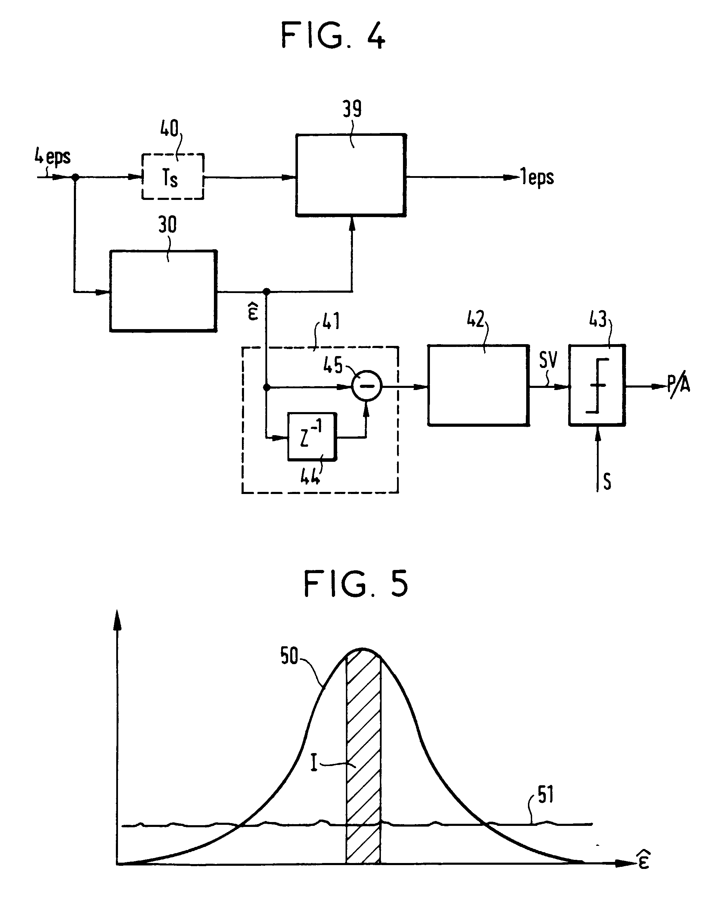

La figure 4 est un schéma synoptique d'un mode de réalisation préférentiel du système de détection de porteuse selon l'invention. Les éléments identiques à ceux de la figure 3 portent les mêmes références numériques.

Selon l'invention, il est prévu des moyens de détection générant un signal de détection de l'onde porteuse lorsqu'un niveau représentatif de la variance des signaux d'erreur atteint une valeur de seuil. Sur la figure 4, ces moyens sont respectivement constitués par un calculateur 42 de la variance du signal d'erreur $\hat{\varepsilon}$ et par un comparateur 43 de cette variance avec une valeur de seuil S.

Plus précisément, et dans un mode de réalisation préférentiel, l'estimation $\hat{\varepsilon}$ est calculée sur N symboles, soit sur 4*N échantillons lorsque l'estimateur est de type Oerder et Meyr, et le calculateur 42 fournit en sortie un signal somme SU égal à :

$$SU = \sum_{n} (\hat{\varepsilon} - \overline{\hat{\varepsilon}})^2$$

avec $\overline{\hat{\varepsilon}}$ la moyenne des estimations $\hat{\varepsilon}$ calculée sur n*N symboles consécutifs.

Lorsque la valeur du signal somme SU est inférieure à la valeur de seuil S, le comparateur 43 fournit en sortie un signal A indicatif de l'absence d'une onde porteuse de la fréquence rythme considérée. Réciproquement, lorsque la valeur du signal somme SU est supérieure à la valeur de seuil S, le comparateur 43 fournit en sortie un signal P indicatif de la présence d'une onde porteuse de la fréquence rythme considérée.

Les valeurs de N et de n sont par exemple respectivement égales à 256 et 16. Il est avantageux de réaliser la sommation des estimations $\hat{\varepsilon}$ de manière glissante, afin d'augmenter la rapidité de la détection.

La valeur de seuil S est déterminée expérimentalement, sur site, afin de tenir compte des conditions de transmission réelles (évanouissements sélectifs, interférences,...). Cette valeur de seuil S est fonction de l'amplitude de la porteuse et de celle du signal d'horloge ayant servi, au niveau de l'émetteur, à échantillonner le signal transmis. Elle est indépendante du rapport Eb/No.

Le calculateur 42 de la variance du signal d'erreur $\hat{\varepsilon}$ peut bien entendu être remplacé par tout autre calculateur fournissant un niveau représentatif de la variance de ces signaux d'erreur. A titre d'exemple, il peut fournir l'écart-type

$$\sigma = \sum_{n} (\hat{\varepsilon} - \overline{\hat{\varepsilon}})$$

ou une puissance autre que 2 de l'écart-type, c'est à dire $\sigma^{\alpha}$, avec $\alpha$ égal à 3, 4 ou plus. D'autres fonctions sont possibles, l'essentiel étant de fournir une indication de la dispersion des signaux d'erreur par rapport à une valeur de référence.

Un dispositif 41 de levée d'ambiguïté de phase de $\pi/2$ est avantageusement placé entre l'estimateur de rythme 30 et les moyens de détection 42, 43. Ce dispositif 41 comporte un circuit retard 44 de durée égale à la période séparant deux estimations $\hat{\varepsilon}$ successives et un soustracteur 45. Il fournit au calculateur 42 des différences $\hat{\varepsilon}_t - \hat{\varepsilon}_{t-1}$.

L'unité à retard 40 est facultative dans le cas où les variations de la fréquence rythme sont lentes.

L'estimateur de rythme 30 peut également être de type Mueller et Müller (et dans ce cas nécessite 2 échantillons par temps symbole au lieu de 4) ou éventuellement de type Gardner. La référence de l'estimation de rythme peut être quelconque et accessoirement remise à jour après chaque estimation $\hat{\varepsilon}$.

En amont de l'estimateur de rythme 30, des moyens sont prévus pour fournir à chaque temps symbole Ts au moins deux échantillons en bande de base du signal numérique reçu, ces moyens étant constitués soit par un échantillonneur seul, soit par un échantillonneur suivi par un filtre interpolateur, comme indiqué précédemment.

La figure 5 montre des caractéristiques de dispersion des estimations $\hat{\varepsilon}$.

Typiquement, la dispersion des estimations $\hat{\varepsilon}$ est de type Gaussien (caractéristique 50) lorsqu'on se trouve en présence d'une détection de présence d'une fréquence porteuse. Dans ce cas, le fait que la variance des signaux d'erreur atteint la valeur de seuil S revient à considérer que l'intégrale partielle de la caractéristique 50, référencée I, atteint une valeur de seuil. Dans le cas où aucune fréquence porteuse n'est reçue, la dispersion des estimations $\hat{\varepsilon}$ est uniforme (caractéristique 51) et la variance est voisine de 0.

Le système de l'invention est avantageusement associé à un estimateur de rythme de type Oerder et Meyr tel que décrit ci-dessus. La récupération de rythme et la détection de présence d'onde porteuse s'effectuent simultanément.

L'invention présente notamment l'avantage d'être insensible aux dérives de fréquence de l'onde porteuse.

Par rapport au système de détection basé sur l'établissement d'un histogramme de phase du signal échantillonné, celui de l'invention est plus rapide car le traitement de détection s'effectue en parallèle du traitement d'estimation de rythme, et non pas en série (détection rythme puis détection présence porteuse). De plus, la détection de porteuse proposée nécessite une accumulation d'un nombre très faible d'échantillons.

L'invention s'applique notamment au mode de transmission AMRT pour la détection de la présence d'un paquet de données. La fiabilité de la détection est d'autant plus importante que l'intervalle de temps d'analyse est long. L'invention s'applique également aux transmissions continues ou en mode SCPC et, dans ce cas, une détection d'onde porteuse peut être confirmée par une seconde détection, afin d'augmenter la fiabilité (surtout si Eb/No est proche de 0 dB).

L'invention se prête notamment à une réalisation sous forme d'un ASIC ou d'un processeur de traitement de signal. A titre d'exemple, il est possible de réaliser un détecteur de présence ou d'absence d'onde porteuse et un dispositif de récupération de rythme par logiciel, à l'intérieur d'un DSP (Digital Signal Processor). On peut utiliser à titre indicatif le circuit TMS 320C50 de Texas Instruments (marque protégée) et ainsi traiter des signaux dont les débits peuvent s'étendre jusqu'à 200 kbits/s.

L'invention conserne également un récepteur de signaux numériques comprenant un tel système de détection.

## Revendications

1. Système de détection de la présence d'une onde porteuse d'un signal numérique se présentant à une fréquence rythme donnée, ledit système comprenant des moyens fournissant à chaque temps symbole (Ts) au moins deux échantillons en bande de base dudit signal numérique, caractérisé en ce qu'il comprend :

   - un estimateur de rythme (30) fournissant, à partir desdits échantillons en bande de base, un signal d'erreur ($\hat{\epsilon}$) correspondant à l'erreur de phase entre la fréquence rythme à récupérer et la fréquence rythme locale ;
   - des moyens de détection (42, 43) générant un signal de détection (A) de ladite onde porteuse lorsqu'un niveau (SU) représentatif de la variance desdits signaux d'erreur atteint une valeur de seuil (S).

2. Système selon la revendication 1, cartactérisé en ce que lesdits moyens de détection comprennent un calculateur (42) de la variance dudit signal d'erreur ($\hat{\epsilon}$).

3. Système selon l'une des revendications 1 et 2, caractérisé en ce qu'il comporte des moyens (41) de levée d'ambiguïté de phase de $\pi/2$ entre ledit estimateur de rythme (30) et lesdits moyens de détection (42, 43).

4. Système selon l'une des revendications 1 à 3, caractérisé en ce que ledit estimateur de rythme (30) est de type Oerder et Meyr.

5. Récepteur comprenant un système selon l'une des revendications 1 à 4.

# FIG. 1

# FIG. 2

FIG. 3

# FIG. 4

# FIG. 5

EP 0 808 043 A1

**Office européen des brevets**

# RAPPORT DE RECHERCHE EUROPEENNE

Numero de la demande

EP 97 40 1033

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PERSONAL COMMUNICATION - FREEDOM THROUGH WIRELESS TECHNOLOGY, SECAUCUS, NJ., MAY 18 - 20, 1993,<br>no. CONF. 43, 18 Mai 1993, INSTITUTE OF ELECTRICAL AND ELECTRONICS ENGINEERS,<br>pages 738-741, XP000393288<br>CLASSEN F ET AL: "AN ALL FEEDFORWARD SYNCHRONIZATION UNIT FOR DIGITAL RADIO"<br>* page 738, colonne 1 - colonne 2, alinéa 1 *<br>* page 738, colonne 2, ligne 35 - page 740, colonne 1, ligne 42 *<br>--- | 1,2 | H04L1/20 |
| A | IEEE GLOBAL TELECOMMUNICATIONS CONFERENCE & EXHIBITION, HOLLYWOOD, NOVEMBER 28 - DECEMBER 1, 1988,<br>vol. VOL. 3 OF 3, no. 1988, 28 Novembre 1988, INSTITUTE OF ELECTRICAL AND ELECTRONICS ENGINEERS,<br>pages 1474-1478, XP000011932<br>D'ANDREA N A ET AL: "COMPARISON OF CARRIER RECOVERY METHODS FOR NARROW-BAND POLYPHASE SHIFT KEYED SIGNALS"<br>* abstract *<br>* page 1476, colonne 2 - page 1477, colonne 1, alinéa 3.4. *<br>---<br><br>-/-- | 1 | DOMAINES TECHNIQUES RECHERCHES (Int.Cl.6)<br><br>H04L |

Le présent rapport a été établi pour toutes les revendications

| Lieu de la recherche | Date d'achèvement de la recherche | Examinateur |
|---|---|---|
| LA HAYE | 16 Juin 1997 | Chauvet, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

9

Office européen
des brevets

**RAPPORT DE RECHERCHE EUROPEENNE**

Numero de la demande
EP 97 40 1033

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | IEEE TRANSACTIONS ON COMMUNICATIONS, vol. 36, no. 5, 5 Mai 1988, USA, pages 605-612, XP000615025 OERDER M ET AL: "DIGITAL FILTER AND SQUARE TIMING RECOVERY" <br> * page 605, colonne 2 - page 606, colonne 1, alinéa II * <br> * page 606, colonne 1 - colonne 2, alinéa IIIA * <br> * page 607, colonne 1 - colonne 2, alinéa IIIB * <br> * page 609, colonne 1, alinéa V * <br> ----- | 1,4 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 16 Juin 1997 | Chauvet, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................

& : membre de la même famille, document correspondant

EPO FORM 1503 03.82 (P04C02)